Europäisches Patentamt

European Patent Office

Office européen des brevets

(11) Publication number: **0 189 671**
**B1**

# EUROPEAN PATENT SPECIFICATION

(45) Date of publication of patent specification: **15.03.89**

(51) Int. Cl.⁴: **B 63 B 21/50, F 16 L 9/14**

(21) Application number: **85309362.3**

(22) Date of filing: **20.12.85**

(54) **Dual wall composite mooring element for deep water offshore structures.**

(30) Priority: **07.01.85 US 689113**

(43) Date of publication of application:
**06.08.86 Bulletin 86/32**

(45) Publication of the grant of the patent:
**15.03.89 Bulletin 89/11**

(84) Designated Contracting States:
**FR GB NL**

(56) References cited:
**EP-A-0 093 012**
**US-A-3 768 842**

(73) Proprietor: **Conoco Inc.**
**1000 South Pine Street P.O. Box 1267**
**Ponca City Oklahoma 74603 (US)**

(72) Inventor: **Maxson, Orwin G.**
**Rt. 3, Box 142**
**Ponca City, OK 74601 (US)**

Inventor: **Ohmart, Robert D.**
**107 Stardust**
**Ponca City, OK 74601 (US)**

Inventor: **Peterson, Marvin L.**
**2028 N. 6**
**Ponca City, OK 74601 (US)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

## Description

This invention relates to the art of floating offshore structures such as tension leg platforms and, more particularly, to a lightweight, steel and fiber composite structure for use as a mooring element for such offshore structures.

With the gradual depletion of subterranean and shallow subsea hydrocarbon reservoirs, the search for additional petroleum reserves is being extended to deeper and deeper waters on the outer continental shelves of the world. As such deeper reservoirs are discovered, increasingly complex and sophisticated production systems have been developed. It is projected that by the year 1990, offshore exploration and production facilities will be required for probing depths of 1800 metres (6,000 feet) or more. Since bottom founded structures are generally limited to water depths of no more than about 460 metres (1,500 feet) by current technology and because of the shear size of the structure required, other, so called compliant structures have been developed.

One type of compliant structure receiving considerable attention is a tension leg platform (TLP). A TLP comprises a semisubmersible-type floating platform anchored by piled foundations through vertically oriented members or mooring lines called tension legs. The tension legs are maintained in tension at all times by insuring that the buoyancy of the TLP exceeds its operating weight under all environmental conditions. The TLP is compliantly restrained in the lateral directions allowing sway, surge and yaw while vertical plane movement of heave, pitch and roll are stiffly restrained by the tension legs.

Several aspects of the design of the compliant structure concept are developed from dynamic considerations of the structure due to excitation by water waves. To minimize sway motions, the natural sway period of the structure must be either less than or greater than the wave periods at the various sea states. A stiff structure such as a fixed platform is designed with a natural sway period which is less than the wave period. However, the natural sway period of fixed platforms increases with increasing water depths and ultimately approaches the wave period resulting in large platform motions. In a compliant structure such as a TLP, the natural sway period is designed to be greater than the wave period.

Current TLP designs utilize heavy walled steel tubulars for the mooring elements. These tension legs constitute a significant weight with respect to the floatimg platform, a weight which must be overcome by the buoyancy of the floating structure. For instance, the tension legs utilized on the world's first commercial TLP which has been installed in the Hutton Field of the United Kingdom North Sea in 148 metres (485 feet) of water comprise steel tubulars having an outer diameter of 26.7 centimetres (10.5 inches) and an inner bore diameter of 7.6 centimetres (3.0 inches). It should be readily apparent that, with increasingly long mooring elements being required for a tension leg platform in deeper and deeper waters, a floating structure having the necessary buoyancy to overcome the extreme weight of such mooring elements must be so large as to be uneconomic. Further, the handling equipment for installing and retrieving the long, heavy tension legs adds excessive weight and complexity to a tension leg platform system. Floatation systems can be utilized but their reliability is questionable. In addition, they cause an increase in the hydrodynamic forces on the structure.

In an effort to lower the weight of deep water tension legs while retaining the strength of the heavy steel tubulars, it has been proposed that high modulus composite structures of carbon fiber and/or aramid fiber be employed. While there is a significant reduction in the weight of such composite tension legs, composite structures are susceptible to impact damage. Furthermore, the high cost of the raw materials renders the use of composites extremely expensive and thus, uneconomic for any installation other than to produce a large subsea oil bearing structure or in very deep waters.

It is an object of this invention to provide a low cost, lightweight mooring element for floating offshore structures.

It is a further object of this invention to provide a lightweight, low cost mooring element which will permit the extension of tension leg platform technology to deeper waters than are currently economically possible utilizing tensioned mooring elements made solely from steel.

Viewed from one aspect the invention provides a mooring assembly which in use forms part of a load bearing bearing mooring element for a floating offshore structure, such assembly comprising an inner tubular member and an outer tubular member, respective end portions of each of said inner and outer tubular members being fixedly interconnected so that said tubular members define an annular space therebetween, there being a plurality of generally longitudinally oriented fibrous elements bonded to the inner surface of said outer tubular member within said annular space whereby tensile strength of the assembly is increased.

A steel and fiber composite structure in accordance with the invention for use as a tensioned mooring element in a tension leg platform can be made neutrally buoyant in water. Such structure is lighter in weight then current heavy-walled steel tubulars but has improved damage resistance and lower cost when compared to fiber reinforced composites.

In a preferred embodiment, the above described assembly further includes syntactic foam filling the remainder of the defined annular space to ensure the buoyancy of the assembly and provide additional rigidity and collapse resistance.

A plurality of the above described assemblies may be attached in an end to end relationship and connected with a subsea anchor member and a floating platform and placed in tension to provide a tensioned mooring element for such floating platform.

An embodiment of the invention will now be described, by way of example only, with reference to the accompanying drawings, wherein:

Figure 1 is a schematic, side elevational view of a tension leg platform in which hybrid composite mooring elements in accordance with the present invention may be incorporated, and

Figure 2 is a cross sectional view of a mooring assembly in accordance with the present invention.

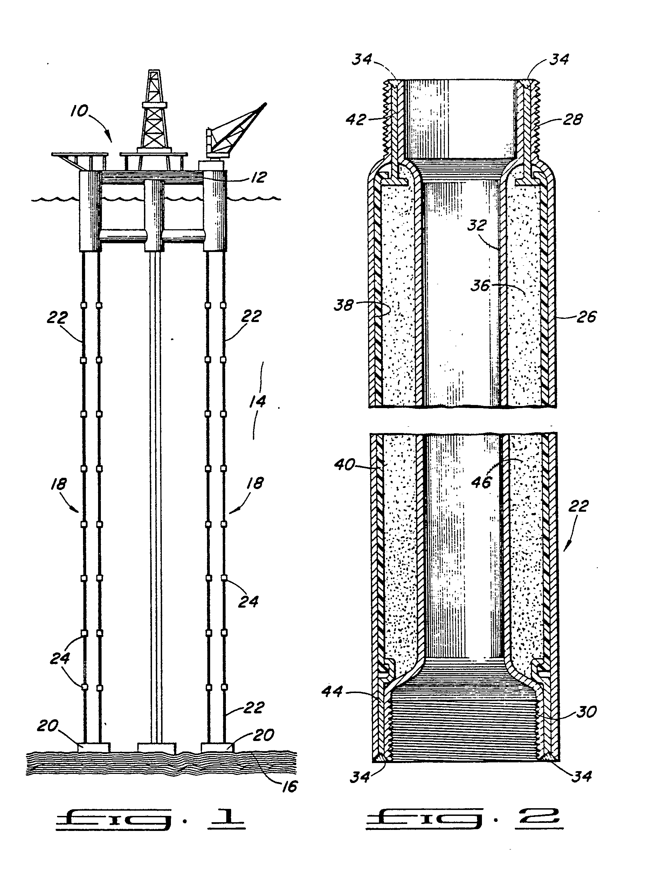

Referring now to the drawings wherein several figures are presented for illustrating a preferred embodiment of the invention only and not for the purpose of limiting the scope of the invention, Figure 1 shows an offshore tension leg platform 10. The TLP 10 generally comprises a platform 12 floating on a body of water 14 and which is anchored to the bottom 16 of the body of water by a plurality of tensioned mooring elements 18 which extend between the floating platform 12 and anchoring means 20 which are located on the bottom 16 of the body of water 14. The anchoring means 20 are adapted for connection of a plurality of tensioned mooring elements 18 and are secured in position by a plurality of pilings extending into the bottom 16.

In accordance with a preferred embodiment of the invention, the tensioned mooring elements 18 comprise a plurality of lightweight steel and fiber composite tubular assemblies 22 which are interconnected at their ends by a plurality of metallic connectors 24. The tensioned mooring elements 18 are maintained in constant tension between the anchoring 20 and the floating platform 12 by the buoyancy of the floating platform 12 which is constantly maintained in excess of its operating weight under all conditions.

As shown in Figure, the steel and fiber composite tubular assemblies 22 of the mooring elements 18 comprise a metallic outer tubular member 26 having a male threaded connector 28 on one end thereof and a female threaded connector 30 formed on its opposite end. The threaded connectors are provided for interconnection with outer tubular assemblies 22. A second, smaller diameter tubular member 32 is concentrically disposed within the outer tubular member 26 and is attached thereto adjacent their end portions by welds 34, 36 adjacent the male and female connector portions 28, 30 respectively.

The concentric inner and outer tubular members 32, 26, respectively, form therebetween an annular space 36. In the assembly shown in Figure 2, the outer wall 38 of the annular space 36 has bonded thereto a plurality of longitudinally oriented fibrous reinforcing members 40 in a resin matrix. In the preferred embodiment shown, longitudinally oriented aramid fibers are bonded together and to the outer wall 38 with an epoxy resin. The fibrous elements greatly increase the tensile strength of the tubular assembly 22. While aramid fibers are preferred due to their high tensile strength, other fibrous materials may be substituted or used in combination with the aramid fibers such·as fibers of carbon, boron, glass, and the like. The amount and type of fibers used may be varied for each application so that the required load-bearing cross sectional area for the fibrous materials is provided within the annular space 36.

While bonding of the fibrous material 40 to the outer wall 38 of the annular space 36 may be sufficient to retain the fibers in a working relationship with the tubular assembly 22, upper and lower clamping members 42 and 44, respectively, may be provided to ensure positive engagement of the fiber and resin composite 40 with the remainder of the structure of the tubular assembly 22. In the preferred embodiment shown in Figure 2, the upper and lower clamping members 42, 44 extend so that they are welded to the structure in common with the outer tubular member 26 and the inner tubular member at welds 34.

In accordance with the yet another aspect of a preferred embodiment of this invention, the remaining portion of the annular space 36 is filled with a material to give additional rigidity and collapse resistance to the assembly 22. The annular space 36 may be filled with foam 46 of any type such as polyurethane foam, the density of which can be varied as it is foamed in place, polystyrene foam or an epoxy-hollow glass microsphere syntactic foam may be provided.

Example

A composite assembly as shown in Figure 2 is constructed utilizing an outer tubular member having 61 centimetre (24 inch) O.D. and 0.64 centimeter (0.25 inch) wall thickness and an inner tubular member having a 27.31 centimeter (10.75 inch) O.D. and a 0.64 centimetre (0.25 inch) wall thickness. Kevlar aramid fiber is bonded to the inner surface of the outer tubular member. The remainder of the annular space is filled with one of the aforementioned rigid foam materials. If a tensile load is only carried by the steel portions of the structure and assuming the structure is loaded to a 3515 kilogram per square centimetre (50,000 psi) yield strength, the tension capacity of the structure would be approximately 610100 kilogram (1,345,000 pounds). A composite member in accordance with this invention having 465 square centimetres (72 square inches) (cross sectional area) of aramid fiber would have a tension capacity of 1.6 million kilograms (3.6 million pounds) with the steel again loaded to its 3515 kilogram per square centimeter (50,000 psi) yield strength. This is based on a modulus of elasticity for aramid fiber of 1270000 kilograms per square centimetre (18,000,000 psi) and the assumption that the portion of the axial load carried by each material is a function of the product of its area and its modulus of elasticity. The cross sectional area of each material can be optimized in the design process for each specific application.

The remainder of the annulus is filled with the foam having a weight density of 240 kilograms per cubic metre (15 pounds per cubic foot). Using a weight density for aramid fiber of 1440 kilograms per cubic metre (90 pounds per cubic foot), the weight per metre of the composite assembly in air would be 245.1 kilograms (164.7 pounds per foot). The assembly would displace 244.7 kilograms per metre (164.4 pounds per foot) in water with the interior of the tubular being flooded. Thus, the dual wall steel and fiber composite mooring element of this invention would have substantially neutral buoyancy in water.

While the inner and outer tubular members of the composite riser are preferably made of steel, other metals or composite materials may be used. Further, antifouling and/or cathodic protection coatings may be provided for the structure.

## Claims

1. A mooring assembly (22) which in use forms part of a load bearing mooring element (18) for a floating offshore structure (10), such assembly comprising an inner tubular member (32) and an outer tubular member (26), respective end portions of each of said inner and outer tubular members being fixedly interconnected so that said tubular members (32, 26) define an annular space therebetween, there being a plurality of generally longitudinally oriented fibrous elements (40) bonded to the inner surface of said outer tubular member (26) within said annular space whereby tensile strength of the assembly (22) is increased.

2. An assembly as claimed in claim 1 wherein said inner and outer tubular members (32, 26) are formed of metal.

3. An assembly as claimed in claim 2 wherein said inner and outer metallic tubular members (32, 26) are formed of steel.

4. An assembly as claimed in any of claims 1 to 3 wherein said fibrous elements are disposed in a resin matrix which is bonded to said inner surface of said outer tubular member (26).

5. An assembly as claimed in any of claims 1 to 4 wherein said fibrous elements include aramid fibers.

6. An assembly as claimed in any preceding claim wherein said fibrous elements include carbon fibers.

7. An assembly as claimed in any preceding claims wherein said fibrous elements include boron fibers.

8. An assembly as claimed in any preceding claim wherein said fibrous elements include glass fibers.

9. An assembly as claimed in any preceding claim further including clamping means (42, 44) for positively engaging the fibrous elements, said clamping means (42, 44) being fixedly attached to said inner and outer tubular members (26, 32).

10. An assembly as claimed in any preceding claim wherein said annular space (36) is provided with a rigid foam filler (46).

11. An assembly as claimed in claim 10 wherein said rigid foam filler (46) comprises polyurethane foam.

12. An assembly as claimed in claim 10 wherein said rigid foam filler (46) comprises polystyrene foam.

13. An assembly as claimed in claim 10 wherein said rigid foam filler (46) comprises an epoxy-hollow glass microsphere syntactic foam.

14. A mooring tether extending between a subsea anchor means and a floating structure, such tether comprising an interconnected plurality of assemblies as claimed in any preceding claim.

## Patentansprüche

1. Verankerungsanordnung (22), die im Gebrauchszustand ein Teil eines lastaufnehmenden Verankerungselements (18) für eine schwimmende Offshore-Anlage (10) bildet, wobei die Anordnung ein inneres, rohrförmiges Element (32) und ein äußeres, rohrförmiges Element (26) aufweist, wobei zugeordnete Endabschnitte der jeweiligen inneren und äußeren, rohrförmigen Elemente fest miteinander derart verbunden sind, daß die rohrförmigen Elemente (32, 26) zwischen einander einen Ringraum bilden, und wobei eine Mehrzahl von im allgemeinen in Längsrichtung orientierten Faserelementen (40) vorgesehen ist, die mit der inneren Fläche des äußeren, rohrförmigen Elements (26) in dem Ringraum verbunden sind, wodurch die Zugfestigkeit der Anordnung (22) erhöht wird.

2. Anordnung nach Anspruch 1, bei der die inneren und äußeren, rohrförmigen Elemente (32, 26) aus Metall ausgebildet sind.

3. Anordnung nach Anspruch 2, bei der die inneren und äußeren, metallischen, rohrförmigen Elemente (32, 26) aus Stahl ausgebildet sind.

4. Anordnung nach einem der Ansprüche 1 bis 3, bei der die Faserelemente in einer Harzmatrix angeordnet sind, die mit der inneren Fläche des äußeren, rohrförmigen Elements (26) verbunden ist.

5. Anordnung nach einem der Ansprüche 1 bis 4, bei der die Faserelemente Aramidfasern enthalten.

6. Anordnung nach einem der vorangehenden Ansprüche, bei der die Faserelemente Kohlenstoffasern enthalten.

7. Anordnung nach einem der vorangehenden Ansprüche, bei der die Faserelemente Borfasern enthalten.

8. Anordnung nach einem der vorangehenden Ansprüche, bei der die Faserelemente Glasfasern enthalten.

9. Anordnung nach einem der vorangehenden Ansprüche, welche ferner eine Befestigungseinrichtung (42, 44) zum zwangsläufigen Eingreifen der Faserelemente enthält, wobei die Befestigungseinrichtung (42, 44) fest an den inneren und äußeren, rohrförmigen Elementen (26, 32) angebracht ist.

10. Anordnung nach einem der vorangehenden Ansprüche, bei der die Ringraum (36) mit einem starren Schaumstoffüllstoff (46) versehen ist.

11. Anordnung nach Anspruch 10, bei der der starre Schaumstoffüllstoff (46) Polyurethanschaum aufweist.

12. Anordnung nach Anspruch 10, bei der der starre Schaumstoffüllstoff (46) Polystyrolschaum aufweist.

13. Anordnung nach Anspruch 10, bei der der starre Schaumstoffüllstoff (46) einen syntaktischen Epoxyschaumstoff mit hohel Glasmikrokugeln aufweist.

14. Halteseil, das zwischen einer Meeresgrundverankerungseinrichtung und einer schwimmenden Anlage verläuft, wobei das Seil eine untereinander verbundene Mehrzahl von Anordnungen nach einem der vorangehenden Ansprüche aufweist.

## Revendications

1. Ensemble d'amarrage (22) qui, pendant l'utilisation, fait partie d'un élément (18) d'amarrage destiné à supporter des forces et à être utilisé dans une structure (10) flottant au large des côtes, l'ensemble comprenant un organe tubulaire interne (32) et un organe tubulaire externe (26), des parties respectives d'extrémité de chacun des organes tubulaires interne et externe étant raccordées à demeure de manière que les organes tubulaires (32, 26) délimitent entre eux un espace annulaire, plusieurs éléments fibreux (40) d'orientation générale longitudinale étant collés à la surface interne de l'organe tubulaire externe (26) dans l'espace annulaire si bien que la résistance à la traction de l'ensemble (22) est accrue.

2. Ensemble selon la revendication 1, dans lequel les organes tubulaires interne et externe (32) 26) sont formés d'un métal.

3. Ensemble selon la revendication 2, dans lequel les organes tubulaires métalliques interne et externe (32, 26) sont formés d'acier.

4. Ensemble selon l'une quelconque des revendications 1 à 3, dans lequel les éléments fibreux sont disposés dans un liant formé d'une résine qui est liée à la surface interne de l'organe tubulaire externe (26).

5. Ensemble selon l'une quelconque des revendications 1 à 4, dans lequel les éléments fibreux comprennent des fibres d'"Aramid".

6. Ensemble selon l'une quelconque des revendications précédentes, dans lequel les éléments fibreux comprennent des fibres de carbone.

7. Ensemble selon l'une quelconque des revendications précédentes, dans lequel les éléments fibreux comprennent des fibres de bore.

8. Ensemble selon l'une quelconque des revendications précédentes, dans lequel les éléments fibreux comprennent des fibres de verre.

9. Ensemble selon l'une quelconque des revendications précédentes, comprenant en outre un dispositif de serrage (42, 44) destiné à coopérer matériellement avec les éléments fibreux, le dispositif de serrage (42, 44) étant fixé aux organes tubulaires interne et externe (26, 32).

10. Ensemble selon l'une quelconque des revendications précédentes, dans lequel l'espace annulaire (36) a un remplissage (46) formé d'une mousse rigide.

11. Ensemble selon la revendication 10, dans lequel le remplissage de mousse rigide (46) est une mousse de polyuréthanne.

12. Ensemble selon la revendication 10, dans lequel le remplissage de mousse rigide (46) est une mousse de polystyrène.

13. Ensemble selon la revendication 10, dans lequel le remplissage de mousse rigide (46) est une mousse syntactique à microsphères creuses de verre liée par une résine époxyde.

14. Ligne d'amarrage disposée entre un dispositif d'ancrage sous-marin et une structure flottante, la ligne comprenant plusieurs ensembles interconnectés réalisés selon l'une quelconque des revendications précédentes.

FIG·1

FIG·2